# EUROPEAN PATENT APPLICATION

(11) **EP 2 554 524 A1**
(43) Date of publication of application: **06.02.2013**
(21) Application number: 11006350.0
(22) Date of filing: 02.08.2011
(51) Int. Cl.: C03C 17/25

(54) **Method for producing high transmission glass coatings**

(71) Applicant: Linde Aktiengesellschaft, 80331 Munich (DE)
(72) Inventor: Carney, Stephen, 81476 München (DE); Reiss, Werner, 83075 Bad Feilnbach (DE)
(74) Representative: Gellner, Bernd

(57) **Abstract**

The invention relates to a method for producing a porous coating on a glass surface, wherein an aqueous potassium silicate solution is applied to the glass surface and a porous silicate coating is formed on said glass surface. The pH of the potassium silicate solution is controlled and the formation of the silicate coating is carried out in a process atmosphere of which the relative humidity is controlled.

## Description

The invention relates to a method for producing a porous coating on a glass surface, wherein an aqueous potassium silicate solution is applied to the glass surface and a porous silicate coating is formed on said glass surface.

It is known to apply transparent coatings to a glass in order to improve its optical properties. An efficient antireflection coating on glass requires coating material of low refractive index. The optimal refractive index of the coating *n(coat)* should equal square root of the refractive index of the glass substrate *n(glass).* This requires *n(coat)* to be as low as 1.23-1.4 for the typical flat glass with *n(glass)* ~1.52. The reflectivity is suppressed around light wavelength *λ(min) = 4 · n(coat) · d(coat),* where d(coat) is the thickness of the coating. In result, the transmission of light through the glass is increased around this wavelength.

It is also known to produce silicate antireflection coatings on glass substrates by applying aqueous potassium silicate solutions on the glass surface followed by drying or thermal setting of the liquid film in ambient air atmosphere. The coatings, produced in that way, have a refractive index close to glass, too high for an optimal antireflection coating and therefore only reduce the reflection of the glass surface by between 1% and 2% at the peak wavelength.

Potassium silicate is a chemical compound of the general formula Kₓ(SiO₃)_{y}, which dissolves in water by dissociation to K⁺ cations and corner shared silicate anions (SiO₄⁻). The exchange of K⁺ ion with H⁺ ion in water environment results in formation of silicic acids [Si(OH)₄, ,H₂SiO₃ etc.] in the solution. In general, an aqueous potassium silicate solution is a mixture of dissolved potassium silicate and silicic acids in a ratio depending on the pH of the solution. A shorthand way for characterization of such mixture uses the ratio of the silicon and potassium oxide species present in the solution X=SiO₂:K₂O. Aqueous solutions of this kind are often also referred to as potassium water glass.

In general, a potassium silicate solution (potassium water glass) with a molar ratio of SiO₂:K₂O lower than 6 and concentration of the silicate in the water up to 10% is stable at a pH factor of typically about 10 to 12. Such solutions are commercially available, can be kept in storage for long time, and can be used as liquid precursors for formation of the desired optical coatings.

By evaporation of the water from a potassium silicate solution the overall concentration of the active silicate substance can be increased. Thereby, the potassium silicate solution is destabilised by initiation of crosslinking of the silicic acids - initially resulting in oligomerization to higher silicic acids and further in a formation of linear or cyclic (SiO₂)ₙ polymers and finally in condensation of solid 3-dimensional SiO₂ structures.

The prior art methods for formation of silicate antireflection coatings form the coatings by drying the solution in uncontrolled ambient or higher temperature atmospheres. Thus, the crosslinking reactions are localised close to the glass surface due to the evaporation of the water causing an increase in the concentration of silicic acids at the glass surface. Therefore, the crosslinking results predominantly in growth of compact SiO₂ coating with too high (inoptimal) refractive index over the glass.

It is an objective of the invention to provide a method for producing glass with a high optical transmission due to a reduction of the glass surface reflectivity below the levels obtainable by the methods known in the prior art.

This object is solved by a method for producing a porous coating on a glass surface, wherein an aqueous potassium silicate solution is applied to the glass surface and a porous silicate coating is formed on said glass surface, and which is characterized in that the pH of the potassium silicate solution is controlled and that said formation of said silicate coating is carried out in a process atmosphere of which the relative humidity is controlled.

The inventive process produces a transparent solid silicate coating, which is highly porous on a scale less than the wavelengths of the light from the visible range, i.e. a nano-porous silicate coating is produced. Thus the inventive coating acts as an effective optical medium of low refractive index. The inventive way of reducing the refractive index of the coating can also referred to as "structural control of the refractive index".

The term "cross-linking" shall mean that silicate units oligomerise and polymerise to form a 1-, 2- or 3-dimensional network. In particular, cross-linking shall mean that the silicic acid molecules in the solution interact via dehydration of their OH terminations to form a siloxane bond according to the reaction:

->Si-O-H + H-O-Si<- ---> ->Si-O-Si<- + H₂O,

wherein the sign -> denotes bondings to 3 O neighbors - either OH groups or O from already formed siloxane bonds.

According to the invention, first an aqueous potassium silicate solution is applied to the glass surface by any common means of applying liquid solutions onto substrates or surfaces - for instance by spraying, painting, rolling, dip coating etc. This step is preferably carried out in an inert atmosphere, preferably in a nitrogen atmosphere that is nominally free of carbon dioxide (CO₂ concentration below 300 ppm). A preferable method is the spray coating, which uses a pump and a nozzle designed to diffuse the potassium silicate solution into fine droplets. In an embodiment of the invention, the spraying is driven by use of inert carrier gas which acts as a propellant.

Before applying the potassium silicate solution, the surface of the glass is preferably prepared for high wetting capability (OH termination) by one or more treatments such as cold and/or hot washing by clean de-ionized water, rinsing with mild acid solutions, flame treatment or plasma activation.

A characteristic of the invention is the treatment of the aqueous potassium silicate solution in a controlled process atmosphere containing the following components:
- Water vapour of controlled vapour pressure (the concentration of the water vapour in the process atmosphere is dependent on the temperature of the glass, local ambient conditions, process time, etc.)
- Hydrogen ion donor in controlled concentration - preferably HCl, although any other gas, which dissociates by donating H⁺ ions to the aqueous solution, can be used (e.g. SO2, S03, CO2, N02 etc.)

It is known that in order to achieve a high transmission and anti-reflection surface coating the porosity of the coating produced using potassium silicate solutions has to be increased compared to the prior art coatings. Therefore, the nucleation process in the liquid phase has to be controlled in such a way that the number of separate sites at which nucleation starts in the liquid phase is increased and that the glass surface is not permitted to be the dominant location for origination and/or starting of the polymerization process. That rate control influences the final coating porosity and the optical properties of the coating. In this way control of the nucleation in the liquid phase allows structural control of the refractive index.

According to the invention the desired porosity is achieved by developing the silicate coating in a process atmosphere in which the relative humidity and the pH of the potassium silicate solution are controlled. The term "control" shall mean that the relative humidity of the atmosphere and the pH of the potassium solution are purposefully set, changed, regulated or actively influenced in order to optimise the development of a porous surface coating.

According to the invention the duration of the liquid phase is controlled. The applied potassium silicate solution is not simply dried in ambient atmosphere but maintained as required in the liquid phase. By controlling the water vapour concentration in the process atmosphere the evaporation rate and thus the duration of the liquid phase can be controlled.

Water evaporation depends on the relative humidity of the atmosphere. The term "relative humidity" shall mean the ratio of the partial pressure of water vapor in the atmosphere to the saturated vapor pressure under those conditions. The higher the concentration of water in the process atmosphere, i.e. the higher the relative humidity of the process atmosphere, the slower the water in the aqueous potassium silicate solution will evaporate.

According to the invention the pH of the potassium silicate solution is reduced during the time when the potassium silicate is in liquid phase. By decreasing the pH of the potassium silicate solution nucleation sites are generated and cross-linking is initiated within the liquid phase.

At low enough pH, this process continues first with formation of oligomers and then polymers. In the late stage, further polymerization takes place resulting in formation of 3-dimensional colloidal particles of SiO₂ within the liquid phase. These colloidal particles have a size in the order of 5nm to 30nm diameter and agglomerate to form the inventive coating with an inter-colloidal porosity on a nanometer scale. It is this inter-colloidal porosity which contributes most to the low refractive index of the inventive coating.

A so formed porous silicate film is an effective optical medium of low refractive index which increases the transmission of a glass significantly.

The invention can be used to produce a porous coating on any kind of glass, for example tube glass, glass bulbs, mirror glass or glass used in the automotive industry. A preferred field of application is the production of coated flat glass, in particular of float glass.

Prior to applying the potassium silicate solution to the glass, the surface of the glass can be prepared, for example to manage the variability of the surface wetting behaviour of different glasses. This can be achieved by one or more treatments such as washing with clean de-ionized water or mild acid solutions, flame treatment and plasma activation.

In one embodiment of the invention the application of the potassium silicate solution to the glass surface and/or the formation of the silicate coating are carried out in an atmosphere which is essentially free of carbon dioxide. Carbon dioxide would react with the solution causing the pH to change as carbonic acid is formed. The term "essentially free of carbon dioxide" shall mean that the carbon dioxide concentration in the atmosphere is preferably below 300 ppm by volume, more preferred below 50 ppm by volume.

The step of applying the potassium silicate solution to the glass surface is preferably carried out in an inert atmosphere, preferably in a nitrogen atmosphere. The potassium silicate solution is preferably applied to or deposited on the glass by means of a carrier gas, especially an inert carrier gas, preferably nitrogen.

The potassium silicate solution can be applied to the glass surface by spraying or rolling or by any other method which is known to apply aqueous solutions. The spraying mechanism preferably comprises a pump and a nozzle which is designed to diffuse the potassium silicate solution into fine droplets. In another preferred embodiment the spraying is achieved by means of a carrier gas which acts as a propellant.

The potassium silicate solution applied to the glass surface is then subjected to a process atmosphere with a controlled relative humidity. The humid atmosphere can for example be produced by passing a dry gas, especially a dry inert gas such as nitrogen, through a water bath in order to load the gas with water vapour. The relative humidity of the controlled atmosphere depends on the temperatures of the water bath, the gas and the glass and can thus be controlled by varying one or more of these temperatures. Further, the humid gas can be mixed with a dry gas to produce a gas of a certain relative humidity.

The formation of the porous silicate structure, i.e. the development from liquid phase nucleation of silicate units, is initiated by lowering the pH of the potassium silicate solution. In one embodiment this is achieved by adding to the process atmosphere a substance which can act as a proton donor. That substance is preferably an acid forming gas, such as HCl. It is also possible to add to the process atmosphere another gaseous or liquid substance or a material in the plasma state which provide protons. Any substance which directly or indirectly makes hydrogen ions available can be used as proton donor. For example, it is also possible to add CO₂ to the process atmosphere. The CO₂ will react with the water in the potassium silicate solution to form HCO₃⁻ and protons H⁺.

The proton donating substance should be provided to the still wet potassium silicate layer on the glass surface. The substance will make available a hydrogen ion which breaks up a Si-O bond and which effects the development of oligomeric silicate units. Thus, at several sites in the aqueous silicate solution the formation of a silica gel starts giving a wide-spread porous structure.

As an example, an acid forming gas such as HCl may be used as proton donor. An inert gas, preferably nitrogen, is blended with the acid forming gas to get a gas mixture with the inert gas as main component. The concentration of the acid forming gas in the gas mixture is for example between 1 % by volume and 10 % by volume or below 5% by volume. That gas mixture is then added to the process atmosphere.

When the pH of the potassium silicate solution is lowered the cross-linking of the silicate units starts and the silicate units in the potassium silicate solution will begin to oligomerize and polymerize.

In one embodiment of the invention the relative humidity of the process atmosphere is chosen such that the thickness of the aqueous layer on the glass substrate remains the same until a porous silicate coating of a pre-defined height has been formed. This is preferably done by first perfoming tests under constant process conditions in order to identify the process parameters, such as for example relative humidity and temperature of the process atmosphere, temperature of the glass, composition and pH of the potassium silicate solution, which are necessary to achieve a porous silicate coating of a particular height. The test results are then used in industrial scale application to set the process conditions to get the desired porous silicate coating properties.

In another embodiment the thickness of the aqueous layer is allowed to decrease in a controlled way during the formation of the porous silica gel.

Another embodiment of the invention relates to the combined and simultaneous evaporation of water and stimulation of the cross-linking. By decreasing the pH the cross-linking process is initiated. By controlling the humidity of the process atmosphere the evaporation of the water is controlled so that cross-linking and drying occur simultaneously. By controlling the water vapour concentration in the process atmosphere the evaporation process can be controlled to make sure that the silicate units still cross-link in an aqueous layer.

The cross-linking of the silicate units and the evaporation of the water from the potassium silicate solution can be achieved step-by-step or simultaneously.

For formation of a silicate surface coating with optimum porous structure the pH value of the potassium silicate solution should be controlled to be between 5 and 9. A maximal agglomeration of the silicate units to a porous silica gel is expected to be in the region of neutral pH. At lower pH values the potassium silicate solution will be stable and no cross-linking will occur. Depending on the silicate concentration in the potassium silicate solution there is a pH range around neutral pH 7 where cross-linking of the silicate units occurs. At low pH values and at high pH values the potassium silicate solution is stable. The invention controls the silicate cross-linking and the formation of silica gel by shifting and controlling the pH of the potassium silicate solution.

Preferably, controlled concentrations of acid vapours are introduced into the process atmosphere. The preferred acid is HCl.

As described above the nucleation and formation of porous silicate coating depends on the water evaporation rate and on the pH of the potassium silicate solution. Both parameters, evaporation rate and pH, are preferably controlled to get an optimum result.

In a preferred embodiment a constant flow of the proton donor is introduced into the process atmosphere. The hydrogen ion concentration in the process atmosphere will increase with time and as a consequence the pH of the potassium silicate solution will decrease. For example, the glass with the applied potassium silicate solution is subjected to a humid nitrogen process atmosphere. Then a constant flow of nitrogen blended with a controlled volume of an acid is injected into the process atmosphere. The proton concentration in the process atmosphere will increase, the pH of the potassium silicate solution will decrease and nucleation will start.

Furthermore, the molar ratio of SiO₂:K₂O has an influence on the final formation of cross-linked silica gel. It has been found that that ratio should preferably be between 3:1 and 6:1. The concentration of the potassium silicate in the potassium silicate solution should preferably be between 0.5 % by volume and 10 % by volume.

In order to reduce the reflection and increase the transmission even more it is preferred to deposit a coating with two or more porous silicate layers on the glass surface. Alternating layers of different refractive index material make it possible to further reduce the reflectivity. By the same method it is also possible to produce a coating which has a very low reflectivity over a broad band of wavelengths. At least one of the porous silicate layers is produced according to the inventive method.

Such a multi-layer coating could for example be produced by the following method steps:
- Application of potassium silicate solution to the glass surface
- Drying of the potassium silicate solution at ambient conditions
- Another application of potassium silicate solution, preferably in a CO₂-free atmosphere
- Formation of a porous silicate layer in a process atmosphere with controlled humidity and controlled pH conditions according to the invention

The invention allows to fine-tune the development of the porous silicate coating and to control the optical properties of the resulting silicate coating. Thickness and refractive index of the produced silicate coating can be controlled. Thereby, it is also possible to produce multi-layer anti reflection coatings with two, three or more layers which have a high transmission over a broad wavelength band.

The invention is in particular useful for the production of solar photovoltaic systems, solar thermal glass or glass mirrors, solar thermal glass tubes, LED glass systems, or for light transmission control of multi-pane architectural glass. The inventive high transmission coating can be produced on flat glass and also on any other kind of glass.

A preferred field of application of glass, especially flat glass, produced according to the present invention is its use as substrate, cover plate and/or base plate for solar modules. Solar modules using such a substrate or cover plate or base plate can achieve a higher efficiency due to the improved anti reflection and transmission properties.

The invention allows to produce glass with substantially increased transmission compared to uncoated glass or to glass coated by prior art methods. The inventive formation of a porous silicate coating in a controlled atmosphere allows to set the transmission peak of the glass in the range required for specific solar cell peak performance. A major advantage in comparison to known glass coatings is that the porous silicate coating is part of the monolithic body of the glass.

### Examples:

### Example 1: Single layer application

This example relates to the production of a high transmission coating consisting of a single porous silicate layer. In a first step a glass pane is prepared to improve the wetting behaviour of its surface. The surface preparation may include treating of the glass pane with de-ionised water, a mild acid solution or other surface treatments such as flame or plasma treatment.

Then a potassium silicate solution is applied, preferably sprayed, onto the glass surface which has a temperature between 20 °C and 80 °C. Important factors are the quantity and distribution of the potassium silicate solution on the glass. It has been shown that by spraying the potassium silicate solution with an inert gas as propellant an even distribution over the glass surface can be achieved. The quantity of potassium silicate solution applied depends on the desired coating thickness and on the concentration of SiO₂ in the potassium silicate solution. To produce a coating with a thickness of 150 nm with a potassium silicate solution comprising a 2% concentration of potassium silicate a 5 to 10 micrometer thick layer of potassium silicate solution is deposited on the glass surface. As a first approximation there is a linear proportionality between the desired coating thickness and the thickness of the potassium solution layer and a reciprocal proportionality between the potassium silicate concentration and the thickness of the potassium solution layer. For example: Keeping the potassium silicate concentration constant the thickness of the potassium silicate solution layer has to be doubled to get a porous silicate coating of double thickness. Or using a 4% concentrated potassium silicate solution requires only a 2.5 to 5 micrometer potassium silicate solution layer on the glass surface to get a 150 nm coating.

In the next step the potassium silicate solution on the glass pane is cured, i.e. nucleation that permits cross-linking is initiated in a controlled manner in a controlled process atmosphere. The rate of water evaporation from the potassium silicate solution is controlled by the relative humidity of the inventive process atmosphere. The process atmosphere comprises as main component nitrogen which has been loaded with water vapour. The nitrogen is preferably bubbled through water to get moist nitrogen. Preferably, the water has a temperature between 20 °C and 80 °C.

The rate of colloid development and the rate of cross-linking are controlled by the flow rate and concentration of the acid vapours. Therefore, controlled concentrations of acid vapours, especially HCl, are mixed into dry nitrogen to get a mixture of dry nitrogen and acid vapour. Preferably HCl is used and the concentration of HCl in the nitrogen acid mixture is between 1 % by volume and 5 % by volume.

A preferably constant flow of the nitrogen acid mixture is introduced into the process atmosphere covering the glass pane and the potassium silicate solution. The HCl vapour will introduce hydrogen ions into the potassium silicate solution and lower the pH to come into the region where the silicate units start to cross-link and oligomerize.

When a sufficient degree of cross-linking and agglomeration of the silicate units and silicate chains has been reached the potassium silicate solution is dried to remove the water from the glass surface. The drying and evaporation is carried out in a nitrogen atmosphere or in ambient air. It can be assisted by infrared radiation or other heating means.

Next, it is preferred to wash out any potassium ions and potassium carbonates. That washing step can use water from ambient temperature up to boiling point or dilute acid solutions.

Finally, the coated glass pane can be dehydrated by means of exposure to thermal toughening, infrared (IR) lamps, burners, halogen lamps or radio waves to drive off any water of hydration.

Glass produced by that method shows a reflectivity of about 1% per side, i.e. a total reflection at the minimum of 2%. In this example, the transmission of the glass was above 98% which has to be compared to the uncoated reference probe which showed a transmission of 91,5%.

### Example 2: Multiple layer application

The second example relates to the production of a high transmission coating on a glass pane wherein the coating comprises at least two layers of porous silicate with different optical properties. The steps of glass preparation and application of the potassium silicate solution are carried out as described above with respect to example 1.

Then, for producing the first layer the potassium silicate solution is dried under ambient atmosphere rather than being cured in a controlled process atmosphere. By drying the silicate solution under ambient atmosphere a silicate layer is achieved which has a thickness controlled to be ¼ lambda for the selected EMS wavelength. The density of that layer is higher than the density of the silicate layer produced in example 1.

The first silicate layer is then washed with a mildly acidic HCl solution to remove potassium carbonates and to prepare the surface for the subsequent second application of a potassium silicate solution. Immediately after the washing step a second potassium silicate solution is sprayed on top of the first silicate layer by means of nitrogen as propelling gas. In this particular example the same potassium silicate solution as for the first layer is used. But it is also possible to use potassium silicate solutions of different composition, in particular of different concentration, for production of the first layer and for production of the second layer.

The second silicate solution is cured in a controlled process atmosphere with a controlled relative humidity into which controlled amounts of HCl vapour are injected. Thereby, the cross-linking of the silicate units and the formation of potassium carbonates is manipulated resulting in a more porous coating compared to the first silicate layer.

Finally the glass is dried, washed and dehydrated.

By using the multi layer application coatings can be produced which show a higher maximum transmission compared to one layer coatings and a broader wavelength range with high transmission.

The inventive method is preferably integrated into a glass production line. In the glass production line a glass melt is formed to flat glass in form of a continuous ribbon. According to an embodiment of the invention a potassium silicate solution is applied to the surface of the continuous glass ribbon. In a particular preferred embodiment the potassium silicate solution is applied to float glass. The invented process can be integrated into the glass manufacturing process and can be carried out in-line. Creating an anti-reflective surface structure can be achieved in-line and in particular before the flat glass has been cut, edged and/or drilled.

According to a preferred embodiment of the invention the potassium silicate solution is applied to the surface of the flat glass during or directly after annealing of the glass. The application of potassium silicate solution is preferably carried out after the hot glass melt has been formed into a glass ribbon which is done either by floating or by rolling. On the other hand, the potassium silicate solution is applied to the glass still within the glass manufacturing line, that is, before the glass ribbon is cut into the desired pieces. The invention preferably utilizes the temperature and condition of the flat glass during the annealing step, i.e. between the end of the forming step and the glass ribbon cutting step at the end of the glass manufacturing line.

For generating the inventive nano-structured surface and to achieve the anti-reflective and high transmission properties the temperature of the glass, especially of the glass ribbon, is preferably between room temperature and 80 °C. These temperatures are substantially lower than the melting temperature of bulk glass but sufficient to bond the silicate units onto the glass ribbon.

In the above described example of the invention the flat glass is a float glass which is produced by means of floating on a tin bath. The present invention can also be used in the production of other types of flat glass including rolled glass, patterned glass, drawn glass, and figured glass. For example the glass melt can be formed by rollers to a glass ribbon to which a potassium silicate solution is applied. Irrespective of the type of production method for producing the flat glass the application of potassium silicate solution is preferably carried out onto the glass ribbon in the production line. In the above described production process for achieving the anti-reflective surface structure potassium silicate solution is applied only to one side of the glass ribbon. However, if appropriate potassium silicate solution can also be applied to both sides of the glass ribbon to form on both sides a nanostructured surface.

It is also possible to integrate the inventive process into a glass processing line where one or more of the following steps are performed: tempering, machining, cutting, edging or drilling the glass. It is preferred to perform the glass processing process and the inventive application of potassium silicate solution and the subsequent formation and development of a porous silicate coating in-line in order to reduce the complexity and the costs of the process.

The invention as well as further details of the invention shall be explained with reference to the attached drawing.

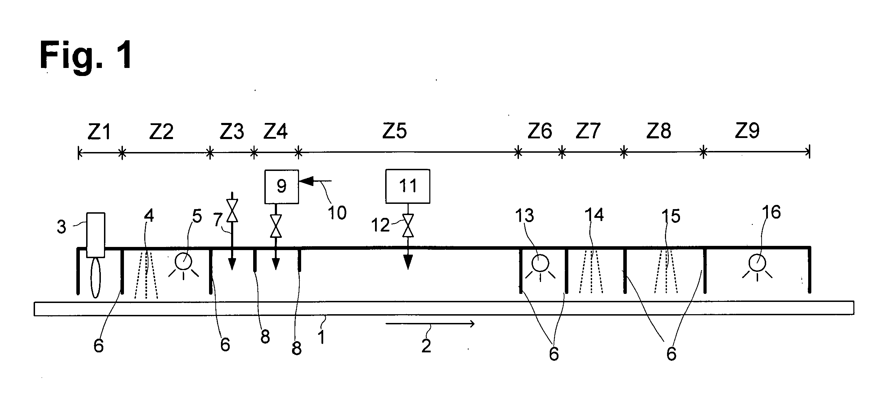

- Figure 1: schematically shows the equipment to carry out the inventive process integrated into a glass processing line.

Figure 1 shows a coating section in a glass processing line in which glass 1, for example an endless glass ribbon, is coated with a high transmission coating. The glass processing line may comprise one or more additional sections (not shown) for cutting, drilling and/or tempering the glass 1.

The coating section comprises nine zones Z1 to Z9. The glass 1 is transported along a transportation path 2 at a speed of typically 10 meters per minute and thereby passes consecutively zones Z1 to Z9. The different zones Z1 to Z9 are partly separated from each other by baffles 6. As it will be explained below the baffles 6 shall ensure that in the different zones Z1 to Z9 the glass 1 can be subjected to atmospheres of different composition.

In the first zone Z1 the glass 1 is subjected to a flame treatment to prepare the glass surface 1 for the subsequent coating steps. A burner 3 heats up the glass surface 1 to a temperature between 100 °C and 400 °C in order to burn impurities on the surface. It is also possible to use a plasma torch, in particular a torch for generating an atmospheric plasma, to activate the glass surface 1.

Next, the glass 1 is passed to zone Z2 where the glass surface is washed with water and dried. Clean or deionised water 4 is sprayed onto the glass surface. Instead of or in addition to the described water spraying the glass surface may be treated by mild acid solutions or any other suitable liquids. Then the glass is dried by means of an infrared lamp 5. After having passed zones 1 and 2 the glass surface has got defined surface conditions.

In zone Z3 a wet nitrogen gas 7 is introduced. The wet nitrogen gas is produced by bubbling dry nitrogen gas through a water bath in order to get a nitrogen gas with a certain humidity. The relative humidity of the wet nitrogen 7 can be influenced by the temperature of the water bath and by addition of dry nitrogen gas to the wet nitrogen gas leaving the water bath.

By the introduction of the wet nitrogen gas 7 a humid atmosphere is produced. Zones Z3, Z4 and Z5 are only separated from each other by small baffles 8 which allow an exchange of the atmosphere through zones Z3, Z4 and Z5. The flow of wet nitrogen 7 introduced into zones Z3, Z4, Z5 is set such that the atmosphere in these zones Z3, Z4, Z5 is saturated with water vapour.

In zone Z4 a potassium silicate precursor 9 is applied to the glass surface 1. The precursor 9 consists of an aqueous potassium silicate solution with a molar ratio of SiO₂ : K₂O between 4:1 and 5:1. The concentration of potassium silicate in the potassium silicate solution is between 1 % by volume and 3 % by volume. A dry nitrogen flow 10 is used as a propellant to push the aqueous potassium silicate solution from the potassium silicate vessel 9 into zone Z4.

The aqueous potassium silicate solution 9 is sprayed onto the glass 1 forming a thin liquid layer of preferably 5 to 10 micrometer thickness on the glass surface 1. The humid nitrogen atmosphere in zones Z3, Z4 and Z5 prevents water from evaporating from the aqueous potassium silicate solution 9. That means the liquid potassium silicate layer is maintained during the passage of the glass 1 through zones Z3, Z4, Z5.

Next, in zone Z5 an acidic component is added to the wet atmosphere. A premixture 11 of hydrogen chloride HCl and dry nitrogen gas is injected into zone Z5. The premixture has a HCl concentration of for example 1 % by volume. By contact of the hydrogen chloride with the liquid layer of aqueous potassium silicate solution on the glass 1, the pH of the potassium silicate solution will decrease and the silicate units in the solution will start to nucleate by cross-linking and oligomerise to form silicate agglomerates, silicate chains and nano-colloids. The flow of the nitrogen hydrogen chloride premixture 11 can be regulated by means of a regulating valve 12. Thereby, the colloid development, that is the formation of larger silicate agglomerates, can be controlled. As described above, the development and cross-linking of the silicate chains occurs in the liquid state since the humid atmosphere in zone Z5 prevents drying of the potassium silicate solution. The nucleation sites at which the cross-linking starts are wide spread in the potassium silicate solution layer on the glass giving a final coating of high porosity.

After the silicate units have cross-linked and a porous silicate structure has been formed in the aqueous solution the glass enters zone Z6. In zone Z6 the water in the aqueous solution is rapidly evaporated and the produced porous silicate coating is dried. The drying is assisted by infrared radiation from an infrared source 13.

Residual potassium-containing molecules, for example potassium carbonates, are washed out in zone Z7 with a 10% hydrochlorid acid 14 in order to extend the lifetime of the treated glass 1 and to improve the optical properties. The hydrochlorid acid 14 is sprayed onto the surface of the glass 1.

Finally, the glass 1 is washed in zone Z8 with water 15 and dried and cured in zone Z9 by heating up to a temperature between 200 °C and 250 °C. The heating may be achieved by infrared radiation 16 or by electrical heating.

The length of the different zones Z1 to Z9 are chosen in such a way that at a given transportation speed the glass remains for a pre-determined time in each zone Z1 to Z9. As schematically indicated in figure 1, the lengths of the zones Z1 to Z9 differ from each other.

## Claims

1. Method for producing a porous coating on a glass surface (1), wherein an aqueous potassium silicate solution (9) is applied to the glass surface (1) and a porous silicate coating is formed on said glass surface (1),
**characterized in that** the pH of the potassium silicate solution (9) is controlled and that said formation of said silicate coating is carried out in a process atmosphere of which the relative humidity is controlled.

2. Method according to claim 1, **characterized in that** the application of the potassium silicate solution (9) to the glass surface (1) and/or the formation of the silicate coating are carried out in an atmosphere which is essentially free of carbon dioxide, especially in an atmosphere with a carbon dioxide concentration of less than 300 ppm by volume.

3. Method according to any of claims 1 or 2, **characterized in that** the pH of the potassium silicate solution (9) is controlled by adding to the process atmosphere a substance which can act as a proton donor, especially an acid forming gas.

4. Method according to claim 3, **characterized in that** said acid forming gas is premixed with an inert gas and that said mixture (11) of inert gas and acid forming gas is added to the process atmosphere.

5. Method according to claim 4, **characterized in that** the concentration of said acid forming gas in said mixture (11) of inert gas and acid forming gas is less than 5 % by volume.

6. Method according to any of claims 1 to 5, **characterized in that** said process atmosphere comprises an inert gas, preferably nitrogen, which has been passed through water in order to increase its relative humidity.

7. Method according to any of claims 1 to 6, **characterized in that** during said formation of said silicate coating said glass (1) has a temperature between 20 °C and 80 °C.

8. Method according to any of claims 1 to 7, **characterized in that** the concentration of potassium silicate in the potassium silicate solution (9) is between 0.5 and 10 % by volume.

9. Method according to any of claims 1 to 8, **characterized in that** the molar ratio of SiO₂ : K₂O in the potassium silicate solution (9) is between 3:1 and 6:1.

10. Method according to any of claims 1 to 9, **characterized in that** said porous coating is produced on flat glass (1).

11. Method according to any of claims 1 to 10, **characterized in that** said potassium silicate solution (9) is applied to said glass (1) in an inert atmosphere.

12. Method according to any of claims 1 to 11, **characterized in that** the pH of the potassium silicate solution (9) is controlled to be between 5 and 9.
